# EUROPÄISCHE PATENTSCHRIFT

(11) **EP 1 864 870 B1**
(45) Veröffentlichungstag und Bekanntmachung des Hinweises auf die Patenterteilung: **03.11.2010**
(21) Anmeldenummer: 07010744.6
(22) Anmeldetag: 31.05.2007
(51) Int. Cl.: B60R 21/231

(54) **Seitenairbagmodul und Sicherheitseinrichtung für ein Kraftfahrzeug mit einem solchen Seitenairbagmodul**
Side airbag module and safety device for a motor vehicle with such a side airbag module
Module d'airbag latéral et dispositif de sécurité pour un véhicule automobile doté d'un tel module d'airbag latéral

(30) Priorität: 09.06.2006 DE 102006026839
(43) Veröffentlichungstag der Anmeldung: 12.12.2007
(73) Patentinhaber: GM Global Technology Operations, Inc., Detroit, MI 48265-3000 (US)
(72) Erfinder: Rick, Ullrich, 55595 Roxheim (DE)
(74) Vertreter: Daniel, Ulrich W.P.

(56) Entgegenhaltungen:
- EP-A- 0 590 518
- EP-A- 1 380 475
- WO-A-97/06987
- DE-A1- 19 605 620

## Beschreibung

Die vorliegende Erfindung betrifft ein Seitenairbagmodul mit einem Gasgenerator und einem von dem Gasgenerator aufblasbaren Gassack, wobei der Gassack eine dem Schulterbereich eines Fahrzeuginsassen zugeordnete obere Kammer und eine dem Beckenbereich des Fahrzeuginsassen zugeordnete untere Kammer aufweist, während zwischen der oberen Kammer und der unteren Kammer ein druckloser Freiraum ausgebildet ist, der dem Thoraxbereich des Fahrzeuginsassen zugeordnet ist. Die vorliegende Erfindung betrifft ferner eine Sicherheitseinrichtung für ein Kraftfahrzeug mit einem solchen Seitenairbagmodul.

Aus dem Stand der Technik sind unterschiedliche Seitenairbagmodule bekannt, die dem Schutz des Fahrzeuginsassen bei einem Seitenaufprall des Kraftfahrzeuges dienen. Die bekannten Seitenairbagmodule umfassen regelmäßig mindestens einen Gassack und einen Gasgenerator zum Aufblasen des Gassacks.

So beschreibt die DE 298 22 159 U1 ein Seitenairbagmodul, dessen Gassack in zwei Kammern unterteilt ist, die im entfalteten bzw. aufgeblasenen Zustand des Gassacks unmittelbar übereinander angeordnet sind. Die vollständige Trennung der beiden Kammern erfolgt hierbei über eine Trennnaht. Die untere Kammer ist dem Becken des Fahrzeuginsassen zugeordnet, während die obere Kammer dem Abstützen des Thoraxbereiches des Fahrzeuginsassen dienen soll. Da der Beckenbereich eines Fahrzeuginsassen robuster als der Thoraxbereich aufgebaut ist, wird bei dem bekannten Seitenairbagmodul in der unteren Kammer ein höherer Druck als in der oberen Kammer erzeugt, so dass der verletzungsanfällige Thoraxbereich sanfter abgestützt wird.

Ein ähnliches Seitenairbagmodul ist auch aus der EP 0769428 A2 bekannt, bei dem jedoch zwei separate Gassäcke verwendet werden, wobei der untere Gassack der Abstützung des Thoraxbereiches dient, wohingegen der obere Gassack zur seitlichen Abstützung des Kopfes des Fahrzeuginsassen konzipiert ist. Auch werden in den beiden Gassäcke die gleichen Drücke erzeugt.

Die vorgenannten Lösungen sind entweder sehr kompliziert oder können den empfindlichen Thoraxbereich im Falle eines Seitenaufpralls nicht in angemessenem Maße vor Verletzungen schützen. Dieses Problems nimmt sich die DE 19605620 A1 an, in der ein Seitenairbagmodul beschrieben ist, das ebenfalls zwei Kammern aufweist, wobei die obere Kammer dem Schulterbereich des Fahrzeuginsassen und die untere Kammer dem Beckenbereich des Fahrzeuginsassen zugeordnet ist. Zwischen den beiden Kammern sind die beiden Gewebelagen des Gassacks derart zusammengenäht, dass eine gegenüber dem Fahrzeuginsassen zurückgesetzte Gewebelage entstanden ist, die in der Höhe des Thoraxbereiches des Fahrzeuginsassen angeordnet ist. Diese Gewebelage ist nunmehr derart weit gegenüber dem Fahrzeuginsassen zurückgesetzt, dass der Fahrzeuginsasse selbst bei einem starken Seitenaufprall lediglich mit dem weniger anfälligen Schulterbereich und Beckenbereich an dem Gassack abgestützt ist, während der Thoraxbereich nicht mit dem Gassack in Berührung kommt.

Der vorgenannte Stand der Technik ist jedoch mit dem Nachteil behaftet, dass die Abstützfläche stark reduziert ist, wodurch der Abstützdruck nunmehr stärker auf den Schulter- und Beckenbereich des Fahrzeuginsassen wirkt. Insbesondere bei älteren Personen, bei denen die Festigkeit der Knochen auch im Bereich der Schulter und des Beckens bereits stark reduziert ist, kann dies wiederum zu Verletzungen in den genannten Bereichen führen. Darüber hinaus hat der Gassack des bekannten Seitenairbagmoduls im aufgeblasenen Zustand nur eine geringe Stabilität.

Um einen geringen Abstützdruck im Schulter- und Beckenbereich des Fahrzeuginsassen zu erzielen, schlägt die EP 1 380 475 A1 ein weiteres Seitenairbagmodul vor, bei dem sich das zwischen der oberen und unteren Kammer angeordnete Gassackgewebe entlang der dem Fahrzeuginsassen zugewandten Seite des Gassacks erstreckt. Auf diese Weise wird auch der Thoraxbereich des Fahrzeuginsassen bei einem Seitenaufprall - zumindest geringfügig - belastet, wodurch sowohl der Schulter- als auch der Beckenbereich entlastet werden.

Das bekannte Seitenairbagmodul ist insofern von Nachteil, als dass der Gassack im aufgeblasenen Zustand einerseits eine relativ geringe Stabilität aufweist, während andererseits eine Verletzung im Schulter- oder Beckenbereich nicht sicher ausgeschlossen werden kann, zumal die genannten Bereiche noch immer relativ stark belastet werden.

Es ist daher eine Aufgabe der vorliegenden Erfindung, eine Seitenairbagmodul zu schaffen, das bei einem einfachen Aufbau und einer hohen Stabilität des Gassacks im aufgeblasenen Zustand eine Verletzungsgefahr des Fahrzeuginsassen im Becken-, Schulter- wie auch Thoraxbereich gleichermaßen sicher ausschließt. Der vorliegenden Erfindung liegt ferner die Aufgabe zugrunde, eine Sicherheitseinrichtung für ein Kraftfahrzeug mit einem solchen vorteilhaften Seitenairbagmodul zu schaffen.

Diese Aufgabe wird durch die in Patentanspruch 1 bzw. 12 angegebenen Merkmale gelöst. Vorteilhafte Ausführungsformen der Erfindung sind Gegenstand der Unteransprüche.

Das erfindungsgemäße Seitenairbagmodul weist einen Gasgenerator und einen von dem Gasgenerator aufblasbaren Gassack auf. Der Gassack weist eine dem Schulterbereich eines Fahrzeuginsassen zugeordnete obere Kammer und eine dem Beckenbereich des Fahrzeuginsassen zugeordnete untere Kammer auf. Zwischen der oberen Kammer und der unteren Kammer ist ein druckloser Freiraum ausgebildet, der dem Thoraxbereich des Fahrzeuginsassen zugeordnet ist. Drucklos bedeutet hierbei, dass der Freiraum nicht durch das Gas des Gasgenerators mit Druck beaufschlagt wird. Der drucklose Freiraum ist von einer an dem Gassack befestigten ersten Begrenzungslage begrenzt, die sich derart entlang der dem Fahrzeuginsassen zugewandten Seite des Gassacks erstreckt, dass der Thoraxbereich bei einem Seitenaufprall von der ersten Begrenzungslage abgestützt werden kann. Die zuvor geschilderten als auch die nachfolgenden Merkmale des Gassacks beziehen sich stets auf den aufgeblasenen Gassack, der unaufgeblasen zum Beispiel zusammengefaltet sein kann. Der drucklose Freiraum ist ferner von einer an dem Gassack befestigten zweiten Begrenzungslage begrenzt, die sich entlang der dem Fahrzeuginsassen abgewandten Seite des Gassacks erstreckt.

Durch die Erfindung wird einerseits verhindert, dass die Abstützkraft lediglich auf den Schulter- und Beckenbereich des Fahrzeuginsassen einwirkt, wie dies bei dem aus der DE 19605620 A1 der Fall ist. Vielmehr dient auch die Begrenzungslage der Abstützung des Thoraxbereiches, wodurch die anderen genannten Bereiche entlastet werden. Andererseits wird der Thoraxbereich durch die Begrenzungslage nicht in einem Maße abgestützt, dass es zu Verletzungen kommt, vielmehr geschieht dies auf eine sanfte Weise. Darüber hinaus wird diese sichere Abstützung des Becken-, Schulter- und Thoraxbereiches durch die Begrenzungslage auf eine besonders einfache Weise realisiert. Des Weiteren trägt die Begrenzungslage zu einer Stabilisierung des aufgeblasenen Gassacks bei, wodurch eine sichere Positionierung des Gassacks im entfalteten und belasteten Zustand erfolgt. Somit sind zunächst die bereits unter Bezugnahme auf die EP 1 380 475 A1 beschriebenen Vorteile realisiert. Durch die zweite Begrenzungslage wird jedoch eine weitere Stabilisierung des aufgeblasenen Gassacks erzielt. Darüber hinaus gewährleistet die der Seitenwand des Kraftfahrzeugs zugewandte zweite Begrenzungslage eine besonders großflächige Krafteinleitung im Falle eines Seitenaufpralls.

In einer bevorzugten Ausführungsform des erfindungsgemäßen Seitenairbagmoduls sind die erste und die zweite Begrenzungslage voneinander beabstandet an dem Gassack angeordnet. Die Begrenzungslagen sind demzufolge nicht flächig aneinander genäht, wie dies beispielsweise bei der DE 19605620 A1 durch die zwei aneinander genähten Gassacklagen realisiert ist. Hierdurch wird eine gleichermaßen sichere wie sanfte Abstützung des Thoraxbereiches durch das zwischen den Begrenzungslagen angeordnete Luftpolster erzielt.

Um den Thoraxbereich besonders sicher und früh an der ersten Begrenzungslage abstützen zu können, ist die erste Begrenzungslage in einer vorteilhaften Ausführungsform des erfindungsgemäßen Seitenairbagmoduls in einem Bereich das Gassacks befestigt, der dem Fahrzeuginsassen am nächsten liegt.

Um ein besonders einfach zu fertigendes Seitenairbagmodul bereitstellen zu können, dessen Gassack besonders einfach durch den Gasgenerator befüllbar ist, ist der Gassack in einer weiteren vorteilhaften Ausführungsform des erfindungsgemäßen Seitenairbagmoduls U-förmig ausgebildet und zwar mit einem oberen Schenkel, in dem die obere Kammer ausgebildet ist, einem unteren Schenkel, in dem die untere Kammer ausgebildet ist, und einem Verbindungsabschnitt, der eine Verbindungskammer umgibt, die die obere und die untere Kammer strömungstechnisch verbindet. Der Freiraum ist dabei zwischen den Schenkeln ausgebildet.

Um ein gleichzeitiges und gleichmäßiges Aufblähen der oberen und der unteren Kammer des Gassacks zu gewährleisten, ist der Gasgenerator in eine weiteren bevorzugten Ausführungsform des erfindungsgemäßen Seitenairbagmoduls derart angeordnet, dass das ausströmende Gas zuerst in der Verbindungskammer freigesetzt wird. Von dort kann das Gas gleichzeitig in die obere und die untere Kammer gelangen. Auf diese Weise werden der Schulterbereich und der Beckenbereich des Fahrzeuginsassen gleichermaßen schnell und nicht etwa zeitversetzt bei einem Seitenaufprall abgestützt. Außerdem wird die erste Begrenzungslage gleichmäßig zwischen den Kammern aufgespannt, um Ihre Funktion der Abstützung des Thoraxbereiches sicher erfüllen zu können.

Um ein besonders kompaktes Seitenairbagmodul bereitstellen zu können, ist der Gasgenerator in einer weiteren vorteilhaften Ausführungsform des erfindungsgemäßen Seitenairbagmoduls in der Verbindungskammer angeordnet.

Um ein Auseinanderspreizen der beiden Schenkel des Gassacks bei einem Aufprall des Fahrzeuginsassen noch sicherer zu verhindern und somit die Stabilität des Gassacks zu erhöhen, sind die freien Enden des ersten und zweiten Schenkels in einer weiteren bevorzugten Ausführungsform des erfindungsgemäßen Seitenairbagmoduls, vorzugsweise stirnseitig, über ein lang gestrecktes Verbindungsmittel miteinander verbunden. Hierbei kann es sich beispielsweise um ein Verbindungsband handeln.

Um die Herstellung des Seitenairbagmoduls zu vereinfachen, ist das Verbindungsmittel in einer weiteren bevorzugten Ausführungsform der Erfindung einstückig mit der ersten und/oder zweiten Begrenzungslage ausgebildet.

Gemäß einer weiteren vorteilhaften Ausführungsform des erfindungsgemäßen Seitenairbagmoduls umgibt das Verbindungsmittel, die erste Begrenzungslage und die zweite Begrenzungslage den Freiraum vollständig.

In einer weiteren vorteilhaften Ausführungsform des erfindungsgemäßen Seitenairbagmoduls sind die erste Begrenzungslage, die zweite Begrenzungslage und/oder das Verbindungsmittel von einem flächigen Gassackgewebe, Vlies oder Netz gebildet.

Gemäß einer weiteren vorteilhaften Ausführungsform des erfindungsgemäßen Seitenairbagmoduls sind die erste Begrenzungslage, die zweite Begrenzungslage und/oder das Verbindungsmittel an den Gassack genäht oder geklebt.

Die erfindungsgemäße Sicherheitseinrichtung für ein Kraftfahrzeug umfasst einen Fahrzeugsitz und ein dem Fahrzeugsitz zugeordnetes Seitenairbagmodul der zuvor beschriebenen Art.

In einer vorteilhaften Ausführungsform der erfindungsgemäßen Sicherheitseinrichtung ist das Seitenairbagmodul seitlich in der Rückenlehne des Fahrzeugsitzes oder seitlich des Fahrzeugsitzes an der Seitenwand des Kraftfahrzeuges angeordnet.

Die Erfindung wird im Folgenden anhand von beispielhaften Ausführungsformen unter Bezugnahme auf die beigefügten Zeichnungen näher erläutert. Es zeigen:
- Fig. 1: eine perspektivische Darstellung einer Ausführungsform des erfindungsgemäßen Seitenairbagmoduls mit aufgeblasenem Gassack und
- Fig. 2: eine schematische Darstellung einer Ausführungsform der erfindungsgemäßen Sicherheitseinrichtung mit dem Seitenairbagmodul von Fig. 1 bei einem Seitenaufprall.

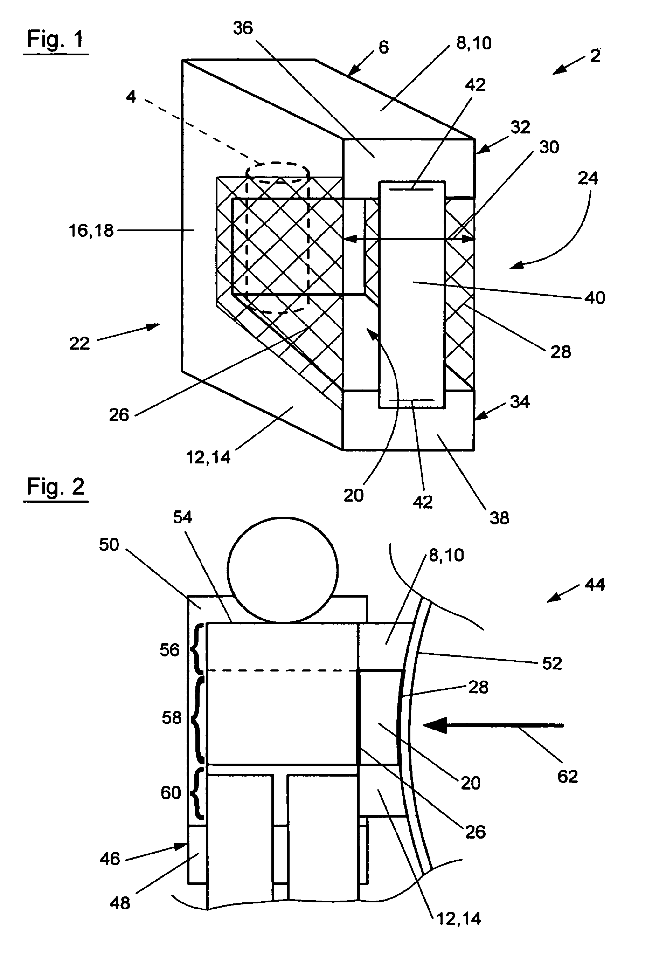

Fig. 1 zeigt eine perspektivische Darstellung einer Ausführungsform des erfindungsgemäßen Seitenairbagmoduls 2. Das Seitenairbagmodul 2 umfasst einen Gasgenerator 4, der in Fig. 1 lediglich gestrichelt angedeutet ist, und einen von dem Gasgenerator 4 aufblasbaren Gassack 6, wobei der Gassack 6 in Fig. 1 bereits vollständig durch den Gasgenerator 4 aufgeblasen ist.

Der Gassack 6 ist U-förmig ausgebildet. Bedingt durch die U-Form umfasst der Gassack 6 einen oberen Schenkel 8, in dem eine obere Kammer 10 ausgebildet ist, einen unteren Schenkel 12, in dem eine untere Kammer 14 ausgebildet ist, und einen Verbindungsabschnitt 16, in dem eine Verbindungskammer 18 ausgebildet ist. Die Verbindungskammer 18 verbindet die obere Kammer 10 mit der unteren Kammer 14 strömungstechnisch, was bedeutet, dass die Kammern 10, 14, 18 miteinander in Strömungsverbindung stehen. Der Gasgenerator 4 ist innerhalb der Verbindungskammer 18 angeordnet, so dass das durch den Gasgenerator 4 freigesetzte Gas zunächst in die Verbindungskammer 18 strömt, um anschließend gleichmäßig in die angrenzenden Kammern 10 und 14 zu strömen. Dies bewirkt ein gleichmäßiges Aufblasen des Gassacks 6.

Zwischen dem oberen Schenkel 8 und dem unteren Schenkel 12 bzw. zwischen der oberen Kammer 10 und der unteren Kammer 14 ist ein druckloser Freiraum 20 ausgebildet. Unter einem drucklosen Freiraum ist hierbei ein Freiraum zu verstehen, der nicht durch den Gasgenerator 4 mit Druck bzw. freigesetztem Gas beaufschlagt wird. Im Einbauzustand erstreckt sich der Verbindungsabschnitt 16 in Höhenrichtung des Kraftfahrzeugs, während sich der obere Schenkel 8 und der untere Schenkel 12 in Sitzrichtung erstrecken. Dabei ist die obere Kammer 10 bzw. der obere Schenkel 8 dem Schulterbereich eines Fahrzeuginsassen zugeordnet, so dass der Schulterbereich des Fahrzeuginsassen an dem oberen Schenkel 8 abstützbar ist. Die untere Kammer 14 bzw. der untere Schenkel 12 ist hingegen dem Beckenbereich des Fahrzeuginsassen zugeordnet, wodurch der Beckenbereich des Fahrzeuginsassen an dem unteren Schenkel 12 abstützbar ist. Der drucklose Freiraum 20 ist wiederum dem Thoraxbereich des Fahrzeuginsassen zwischen dem Schulterbereich und dem Beckenbereich zugeordnet. Der Gassack 6 umfasst eine erste Seite 22 und eine gegenüberliegende zweite Seite 24. Im Einbauzustand ist die erste Seite 22 dem Fahrzeuginsassen zugewandt, während die zweite Seite dem Fahrzeuginsassen abgewandt bzw. der Seitenwand des Kraftfahrzeugs zugewandt ist. Die genaue Anordnung im Einbauzustand wird später unter Bezugnahme auf Fig. 2 nochmals eingehender erläutert.

Der drucklose Freiraum 20 ist von einer an dem Gassack 6 befestigten ersten Begrenzungslage 26 begrenzt, die sich entlang der dem Fahrzeuginsassen zugewandten ersten Seite 22 des Gassacks 6 erstreckt. Darüber hinaus wird der drucklose Freiraum 20 ferner von einer an dem Gassack 6 befestigten zweiten Begrenzungslage 28 begrenzt, die sich entlang der dem Fahrzeuginsassen abgewandten zweiten Seite 24 des Gassacks 6 erstreckt. Die erste Begrenzungslage 26 und die zweite Begrenzungslage 28 werden in der vorliegenden Ausführungsform von einem flächigen Netz gebildet, das an dem Gassack 6 festgenäht wurde. Es käme jedoch auch eine Begrenzungslage in Form eines anderen Flächengebildes, wie beispielsweise in Form eines Vlieses oder Gassackgewebes, in Frage. In Breitenrichtung des Gassacks 6 sind die beiden Begrenzungslagen 26, 28 voneinander beabstandet an dem Gassack 6 befestigt, so dass zwischen diesen ein Abstand 30 besteht. Die erste Begrenzungslage 26 ist ferner in einem Bereich an der ersten Seite 22 des Gassacks 6 befestigt, der dem Fahrzeuginsassen am nächsten liegt.

Der obere und untere Schenkel 8, 12 weisen jeweils ein freies Ende 32, 34 mit einer Stirnseite 36, 38 auf, wobei die Stirnseiten 36, 38 mit Hilfe eines lang gestreckten Verbindungsmittels 40 in Form eines Bandes aus Gassackgewebe miteinander verbunden sind. Zu diesem Zweck wurden die Enden des Verbindungsmittels 40 an den Stirnseiten 36, 38 festgenäht, wie dies anhand der Nähte 42 in Fig. 1 angedeutet ist.

Der besondere Vorteil des Seitenairbagmoduls 2 besteht nunmehr darin, dass sich die erste Begrenzungslage 26 derart entlang der dem Fahrzeuginsassen zugewandten ersten Seite 22 des Gassacks 6 erstreckt, dass der Thoraxbereich bei einem Seitenaufprall von der ersten Begrenzungslage 26 abstützbar ist, wie dies nachstehend unter Bezugnahme auf Fig. 2 eingehender erläutert wird. Fig. 2 zeigt dabei eine Ausführungsform der erfindungsgemäßen Sicherheitseinrichtung 44 mit dem Seitenairbagmodul 2 von Fig. 1, wobei aus Gründen der Übersichtlichkeit nicht alle Einzelheiten des Seitenairbagmoduls 2 in Fig. 2 wiedergegeben sind.

Die Sicherheitseinrichtung 44 umfasst einen Fahrzeugsitz 46 mit einem Sitzteil 48 und einer Rückenlehne 50. Das Seitenairbagmodul 2 mit nicht aufgeblasenem Gassack 6 ist in diejenige Seite der Rückenlehne 50 integriert, die der Seitenwand 52 des Kraftfahrzeugs zugewandt ist, wobei sich der Gassack 6 bei einem Seitenaufprall zwischen den Fahrzeuginsassen 54 und die Seitenwand 52 entfaltet, wie dies in Fig. 2 gezeigt ist. Der Körper des lediglich schematisch angedeuteten Fahrzeuginsassen 54 lässt sich in einen Schulterbereich 56, einen Thoraxbereich 58 und einen Beckenbereich 60 unterteilen.

Kommt es nun zu einem Seitenaufprall, der in Fig. 2 anhand des Pfeils 62 angedeutet ist, so wird der Gassack 6 durch den Gasgenerator 4 aufgeblasen. Der vollständig entfaltete Gassack 6 ist dann derart angeordnet, dass der Schulterbereich 56 des Fahrzeuginsassen 54 an dem oberen Schenkel 8 und der Beckenbereich 60 des Fahrzeuginsassen 54 an dem unteren Schenkel 12 abgestützt ist. Der Thoraxbereich 58 wird hingegen sanfter durch die erste Begrenzungslage 26 abgestützt, wodurch Schulter-, Becken- und Thoraxbereich gleichermaßen vor Verletzungen geschützt sind. Die an der eingedrückten Seitenwand 52 anliegende zweite Begrenzungslage 28 hat wiederum den Effekt, dass die durch die deformierte Seitenwand 52 eingebrachte Kraft, gleichmäßig auf den Gassack 6 verteilt wird. Das in Fig. 2 nicht dargestellte Verbindungsmittel 40 bewirkt beim Abstützen des Fahrzeuginsassen 54 an dem Gassack 6, dass der obere und der untere Schenkel 8, 12 nicht auseinandergedrückt werden, so dass der entfaltete Gassack 6 eine hohe Sicherheit bietet.

### Bezugszeichenliste

- 2: Seitenairbagmodul
- 4: Gasgenerator
- 6: Gassack
- 8: oberer Schenkel
- 10: obere Kammer
- 12: unterer Schenkel
- 14: untere Kammer
- 16: Verbindungsabschnitt
- 18: Verbindungskammer
- 20: druckloser Freiraum
- 22: erste Seite
- 24: zweite Seite
- 26: erste Begrenzungslage
- 28: zweite Begrenzungslage
- 30: Abstand
- 32: freies Ende
- 34: freies Ende
- 36: Stirnseite
- 38: Stirnseite
- 40: Verbindungsmittel
- 42: Nähte
- 44: Sicherheitseinrichtung
- 46: Fahrzeugsitz
- 48: Sitzteil
- 50: Rückenlehne
- 52: Seitenwand
- 54: Fahrzeuginsasse
- 56: Schulterbereich
- 58: Thoraxbereich
- 60: Beckenbereich
- 62: Pfeil

## Patentansprüche

1. Seitenairbagmodul mit einem Gasgenerator (4) und einem von dem Gasgenerator (4) aufblasbaren Gassack (6), wobei der Gassack (6) eine dem Schulterbereich eines Fahrzeuginsassen zugeordnete obere Kammer (10) und eine dem Beckenbereich des Fahrzeuginsassen zugeordnete untere Kammer (14) aufweist, während zwischen der oberen Kammer (10) und der unteren Kammer (14) ein druckloser Freiraum (20) ausgebildet ist, der dem Thoraxbereich des Fahrzeuginsassen zugeordnet und von einer an dem Gassack (6) befestigten ersten Begrenzungslage (26) begrenzt ist, die sich derart entlang der dem Fahrzeuginsassen zugewandten Seite (22) des Gassacks (6) erstreckt, dass der Thoraxbereich bei einem Seitenaufprall von der ersten Begrenzungslage (26) abstützbar ist, **dadurch gekennzeichnet, dass** der drucklose Freiraum (20) ferner von einer an dem Gassack (6) befestigten zweiten Begrenzungslage (28) begrenzt ist, die sich entlang der dem Fahrzeuginsassen abgewandten Seite (24) des Gassacks (6) erstreckt.

2. Seitenairbagmodul nach Anspruch 1, **dadurch gekennzeichnet, dass** die erste und die zweite Begrenzungslage (26, 28) voneinander beabstandet an dem Gassack (6) angeordnet sind.

3. Seitenairbagmodul nach einem der vorangehenden Ansprüche, **dadurch gekennzeichnet, dass** die erste Begrenzungslage (26) in einem Bereich das Gassacks (6) befestigt ist, der dem Fahrzeuginsassen am nächsten liegt.

4. Seitenairbagmodul nach einem der vorangehenden Ansprüche, **dadurch gekennzeichnet, dass** der Gassack (6) U-förmig mit einem oberen Schenkel (8), in dem die obere Kammer (10) ausgebildet ist, einem unteren Schenkel (12), in dem die untere Kammer (14) ausgebildet ist, und einem Verbindungsabschnitt (16) ausgebildet ist, der eine Verbindungskammer (18) umgibt, die die obere und die untere Kammer (10, 14) strömungstechnisch verbindet, wobei der Freiraum (20) zwischen den Schenkeln (8, 12) ausgebildet ist.

5. Seitenairbagmodul nach Anspruch 4, **dadurch gekennzeichnet, dass** der Gasgenerator (4) derart angeordnet ist, dass das ausströmende Gas zuerst in der Verbindungskammer (18) freisetzbar ist.

6. Seitenairbagmodul nach Anspruch 5, **dadurch gekennzeichnet, dass** der Gasgenerator (4) in der Verbindungskammer (18) angeordnet ist.

7. Seitenairbagmodul nach einem der Ansprüche 4 bis 6, **dadurch gekennzeichnet, dass** die freien Enden (32, 34) des ersten und zweiten Schenkels (8, 12), vorzugsweise stirnseitig, über ein lang gestrecktes Verbindungsmittel (40) miteinander verbunden sind.

8. Seitenairbagmodul nach Anspruch 7, **dadurch gekennzeichnet, dass** das Verbindungsmittel (40) einstückig mit der ersten und/oder zweiten Begrenzungslage (26, 28) ausgebildet ist.

9. Seitenairbagmodul nach Anspruch 8, **dadurch gekennzeichnet, dass** das Verbindungsmittel (40), die erste Begrenzungslage (26) und die zweite Begrenzungslage (28) den Freiraum (20) vollständig umgibt.

10. Seitenairbagmodul nach einem der vorangehenden Ansprüche, **dadurch gekennzeichnet, dass** die erste Begrenzungslage (26) und die zweite Begrenzungslage (28) von einem flächigen Gassackgewebe, Vlies oder Netz gebildet sind.

11. Seitenairbagmodul nach einem der Ansprüche 7 bis 9, **dadurch gekennzeichnet, dass** das Verbindungsmittel (40) von einem flächigen Gassackgewebe, Vlies oder Netz gebildet ist.

12. Seitenairbagmodul nach einem der vorangehenden Ansprüche, **dadurch gekennzeichnet, dass** die erste Begrenzungslage (26) und die zweite Begrenzungslage (28) an den Gassack (6) genäht oder geklebt sind.

13. Seitenairbagmodul nach einem der Ansprüche 7 bis 9, **dadurch gekennzeichnet, dass** das Verbindungsmittel (40) an den Gassack (6) genäht oder geklebt ist.

14. Sicherheitseinrichtung für ein Kraftfahrzeug mit einem Fahrzeugsitz (46) und einem dem Fahrzeugsitz (46) zugeordneten Seitenairbagmodul (2) nach einem der vorangehenden Ansprüche.

15. Sicherheitseinrichtung nach Anspruch 12, **dadurch gekennzeichnet, dass** das Seitenairbagmodul (2) seitlich in der Rückenlehne (50) des Fahrzeugsitzes (46) oder seitlich des Fahrzeugsitzes an der Seitenwand des Kraftfahrzeuges angeordnet ist.

## Claims

1. A side airbag module, comprising a gas generator (4) and an airbag (6) inflatable by the gas generator (4), with the airbag (6) having an upper chamber (10) associated with the shoulder region of a vehicle passenger and a bottom chamber (14) associated with the pelvic region of the vehicle passenger, wherein an unpressurized free space (20) is formed between the upper chamber (10) and the bottom chamber (14), which free space is associated with the thorax region of the vehicle passenger and is delimited by a first boundary layer (26) fastened to the airbag (6), which boundary layer extends along the side (22) of the airbag (6) facing the vehicle passenger in such a way that the thorax region can be supported by the first boundary layer (26) in case of a side impact, **characterized in that** the unpressurized free space (20) is further delimited by a second boundary layer (28) which is fastened to the airbag (6) and extends along the side (24) of the airbag (6) which faces away from the vehicle passenger.

2. A side airbag module according to claim 1, **characterized in that** the first and second boundary layer (26, 28) are arranged spaced from one another on the airbag (6).

3. A side airbag module according to one of the preceding claims, **characterized in that** the first boundary layer (26) if fastened to a region of the airbag (6) which is closest to the vehicle passenger.

4. A side airbag module according to one of the preceding claims, **characterized in that** the airbag (6) is formed in a U-shaped manner with an upper leg (8) in which the upper chamber (10) is formed, a bottom leg (12) in which the bottom chamber (14) is formed and a connecting section (16) which encloses a connecting chamber (18) which connects the upper and bottom chamber (10, 14) in terms of flow, with the free space (20) being formed between the legs (8, 12).

5. A side airbag module according to claim 4, **characterized in that** the gas generator (4) is arranged in such a way that the escaping gas can be released first into the connecting chamber (18).

6. A side airbag module according to claim 5, **characterized in that** the gas generator (4) is arranged in the connecting chamber (18).

7. A side airbag module according to one of the claims 4 to 6, **characterized in that** the free ends (32, 34) of the first and second leg (8, 12) are connected to one another via an elongated connection means (40), preferably on the face side.

8. A side airbag module according to claim 7, **characterized in that** the connection means (40) is arranged integrally with the first and/or second boundary layer (26, 28).

9. A side airbag module according to claim 8, **characterized in that** the connection means (40), the first boundary layer (26) and the second boundary layer (28) completely enclose the free space (20).

10. A side airbag module according to one of the preceding claims, **characterized in that** the first boundary layer (26) and the second boundary layer (28) are formed by a planar airbag fabric, non-woven material or net.

11. A side airbag module according to one of the claims 7 to 9, **characterized in that** the connection means (40) is formed by a planar airbag fabric, non-woven material or net.

12. A side airbag module according to one of the preceding claims, **characterized in that** the first boundary layer (26) and the second boundary layer (28) are sewed or glued to the airbag (6).

13. A side airbag module according to one of the claims 7 to 9, **characterized in that** the connection means (40) is sewed or glued to the airbag (6).

14. A safety device for a motor vehicle, comprising a vehicle seat (46) and a side airbag module (2) according to one of the preceding claims which is associated with the vehicle seat (46).

15. A safety device according to claim 12, **characterized in that** the side airbag module (2) is arranged laterally in the backrest (50) of the vehicle seat (46) or laterally in relation to the vehicle seat in the side wall of the motor vehicle.

## Revendications

1. Module de coussin gonflable de sécurité latéral avec un générateur de gaz (4) et un sac à gaz (6) pouvant être gonflé par le générateur de gaz (4), dans lequel le sac à gaz (6) présente un compartiment supérieur (10) associé à la région des épaules d'un occupant du véhicule et un compartiment inférieur (14) associé à la région du bassin d'un occupant du véhicule, tandis qu'un espace libre sans pression (20) est formé entre le compartiment supérieur (10) et le compartiment inférieur (19) et associé à la région du thorax de l'occupant du véhicule et est délimité par une première couche de délimitation (26) fixée sur le sac à gaz (6), qui s'étend le long du côté (22) du sac à gaz (6) dirigé vers l'occupant du véhicule de telle façon qu'en cas de collision latérale, la région du thorax puisse être soutenue par la première couche de délimitation (26), **caractérisé en ce que** l'espace libre sans pression (20) est en outre délimité par une deuxième couche de délimitation (28) fixée sur le sac à gaz (6) qui s'étend le long du côté (24) du sac à gaz (6) dirigé à l'opposé de l'occupant du véhicule.

2. Module de coussin gonflable de sécurité latéral selon la revendication 1, **caractérisé en ce que** la première couche de délimitation et la deuxième (26, 28) sont disposées à distance l'une de l'autre sur le sac à gaz (6).

3. Module de coussin gonflable de sécurité latéral selon l'une des revendications précédentes, **caractérisé en ce que** la première couche de délimitation (26) est fixée dans une zone du sac à gaz (6) qui est la plus proche de l'occupant du véhicule.

4. Module de coussin gonflable de sécurité latéral selon l'une des revendications précédentes, **caractérisé en ce que** le sac à gaz (6) est en forme de U avec une branche supérieure (8) dans laquelle est formé le compartiment supérieur (10), une branche inférieure (12) dans laquelle est formé le compartiment inférieur (14) et une partie de liaison (16) entourant un compartiment de liaison (18) qui met en liaison par circulation les compartiments supérieur et inférieur (10, 14), l'espace libre (20) étant formé entre les branches (8, 12).

5. Module de coussin gonflable de sécurité latéral selon la revendication 4, **caractérisé en ce que** le générateur de gaz (4) est disposé de telle façon que le gaz qui s'échappe peut être libéré d'abord dans le compartiment de liaison (18).

6. Module de coussin gonflable de sécurité latéral selon la revendication 5, **caractérisé en ce que** le générateur de gaz (4) est disposé dans le compartiment de liaison (18).

7. Module de coussin gonflable de sécurité latéral selon l'une des revendications 4 à 6, **caractérisé en ce que** les extrémités libres (32, 34) de la première branche et de la deuxième (8, 12) sont reliées entre elles, de préférence sur la face d'extrémité, par un moyen de liaison allongé (40).

8. Module de coussin gonflable de sécurité latéral selon la revendication 7, **caractérisé en ce que** le moyen de liaison (40) est formé d'un seul tenant avec la première couche de délimitation et/ou la deuxième (26, 28).

9. Module de coussin gonflable de sécurité latéral selon la revendication 8, **caractérisé en ce que** le moyen de liaison (40), la première couche de délimitation (26) et la deuxième couche de délimitation (28) entourent complètement l'espace libre (20).

10. Module de coussin gonflable de sécurité latéral selon l'une des revendications précédentes, **caractérisé en ce que** la première couche de délimitation (26) et la deuxième couche de délimitation (28) sont formées par un textile de sac à gaz, non-tissé ou filet plat.

11. Module de coussin gonflable de sécurité latéral selon l'une des revendications 7 à 9, **caractérisé en ce que** le moyen de liaison (40) est formé par un textile de sac à gaz, non-tissé ou filet plat.

12. Module de coussin gonflable de sécurité latéral selon l'une des revendications précédentes, **caractérisé en ce que** la première couche de délimitation (26) et la deuxième couche de délimitation (28) sont cousues ou collées sur le sac à gaz (6).

13. Module de coussin gonflable de sécurité latéral selon l'une des revendications 7 à 9, **caractérisé en ce que** le moyen de liaison (40) est cousu ou collé sur le sac à gaz (6).

14. Dispositif de sécurité pour un véhicule à moteur avec un siège de véhicule (46) et un module de coussin gonflable de sécurité latéral (2) selon l'une des revendications précédentes associé au siège de véhicule (46).

15. Dispositif de sécurité selon la revendication 12, **caractérisé en ce que** le module de coussin gonflable de sécurité latéral (2) est disposé sur le côté dans le dossier (50) du siège de véhicule (46) ou sur le côté du siège de véhicule sur la paroi latérale du véhicule à moteur.
